# EUROPÄISCHE PATENTSCHRIFT

(11) **EP 1 259 304 B1**
(45) Veröffentlichungstag und Bekanntmachung des Hinweises auf die Patenterteilung: **08.10.2003**
(21) Anmeldenummer: 01905639.9
(22) Anmeldetag: 03.01.2001
(51) Int. Cl.: B01D 29/15, B01D 29/92

(54) **FILTERVORRICHTUNG**
FILTER DEVICE
DISPOSITIF FILTRE

(30) Priorität: 19.01.2000 DE 10001907
(43) Veröffentlichungstag der Anmeldung: 27.11.2002
(73) Patentinhaber: Hydac Process Technology GmbH, 66538 Neunkirchen (DE)
(72) Erfinder: LANG, Norbert, 66440 Blieskastel (DE); HAUSDORF, Jürgen, 66130 Saarbrücken (DE); WNUK, Ralf, 66450 Bexbach (DE)
(74) Vertreter: Bartels, Martin Erich Arthur
(86) Internationale Anmeldenummer: EP0100010
(87) Internationale Veröffentlichungsnummer: WO01052966

(56) Entgegenhaltungen:
- WO-A-90/00434
- GB-A- 2 075 364
- US-A- 3 817 377
- US-A- 4 043 918
- US-A- 4 052 315
- US-A- 4 169 795
- US-A- 4 964 984

## Beschreibung

Die Erfindung betrifft eine Filtervorrichtung mit einem Filtergehäuse mit den Merkmalen des Oberbegriffes des Patentanspruches 1.

Dahingehende Filtervorrichtungen (US-PS'n 4,964,984, 4,169795, 4,052,315, 4,043,918 und GB 2 075 364) sind in einer Vielzahl von Ausführungsformen auf dem Markt frei erhältlich. Der Aufbau der Filterelemente selbst, die die Aufgabe haben, Verunreinigungen aus dem Fluid abzufiltrieren, ist herstellerabhängig. Höherwertige Filterelemente haben dabei einen mehrlagigen Mattenaufbau, der sich mindestens an einem Stützgewebe abstützen kann, um auch gegenüber höheren Drücken oder Druckspitzen beständig zu sein.

Grundsätzlich ist es wünschenswert, daß es innerhalb des Filterraumes beim Filtriervorgang zu einem gleichmäßigen Strömungsverhalten kommt unter Vermeidung von Toträumen, wobei an das dahingehende Verhalten umso größere Anforderungen gestellt werden, als die Viskosität des Fluids zunimmt, insbesondere wenn Polymerschmelzen oder Polymerlösungen zu filtrieren sind.

Durch die US-3,817,377 ist eine gattungsgemäße Filtervorrichtung bekannt, insbesondere zum Abtrennen von Verunreinigungen aus heißem, thermoplastischem Polymermaterial. Gemäß einer Ausgestaltung der bekannten Filtervorrichtung nach den Fig.4 und 5 unterteilt ein konisches Filterelement einen Filterraum in zwei konische Teilräume, wobei die Konizitäten der beiden Teilräume in gegensätzlichen Richtungen stetig verlaufen, aber in unterschiedlichem Maße, d.h. auf eine Vergleichsstelle bezogen; mit unterschiedlichen Querschnitten. Ausgehend vom Filterauslaß in Richtung des Filtereinlasses ist der Durchmesser des Filterelementes im wesentlichen konstant bemessen und die Konizität des Filterelementes ergibt sich bezogen auf die Längsrichtung des Filterauslasses. Die den Teilräumen nachfolgenden Begrenzungswände als Gehäuseteile weisen eine vergleichbare konische Orientierung auf wie das Filterelement, so daß die dahingehend bekannte Lösung konstruktiv kompliziert aufbaut. Aufgrund der unterschiedlichen Querschnittsverläufe bezogen auf eine Vergleichsstelle ist insbesondere bei hochyiskosen Fluiden eine energetisch ungünstige Strömungsführung erhalten.

Ausgehend von diesem Stand der Technik liegt der Erfindung die Aufgabe zugrunde, die bekannten Filtervorrichtungen dahingehend weiter zu verbessern, daß sie auch bei hochviskosen Fluiden energetisch günstig einen Filtrierbetrieb erlauben. Eine dahingehende Aufgabe löst eine Filtervorrichtung mit den Merkmalen des Patentanspruches 1 in seiner Gesamtheit.

Dadurch, daß gemäß dem kennzeichnenden Teil des Patentanspruches 1 die Verjüngung des Querschnittes des einen Teilraumes in gleichem Maße stattfindet wie die Verbreiterung des Querschnittes des anderen Teilraumes, daß der eine Teilraum nach außen zur Umgebung und der andere Teilraum nach innen zur Mitte der Filtervorrichtung von jeweils einer zylindrischen Wand begrenzt sind und daß das Filterelement sich in Richtung vom Filterauslaß zum Filtereinlaß hin konisch verjüngt, ist aufgrund der in gleichem Maße sich verändernden Querschnitte der beiden Teilräume eine optimale Verweilzeitverteilung erreicht bei gleichmäßiger Strömungsgeschwindigkeit des insbesondere hochviskosen Fluids, beispielsweise in Form der Polymerschmelze oder einer Polymerlösung. Ferner sind dadurch im Filtrierbetrieb Toträume innerhalb des Filtergehäuses vermeidbar und eine gleichförmige, zu filtrierende Masseverteilung innerhalb des Filtergehäuses erreicht. Dies führt zu einem energetisch günstigen Filtrierbetrieb und zu einer Kostenreduktion. Ferner wird erreicht, daß das zu filtrierende Fluid sich von einem engen Querschnitt aus betrachtet in Richtung eines weiten Querschnitts expandiert und umgekehrt, von einem weiten in einen solchen Teilraum mit dahingehend verringertem Querschnitt.

Zum Erreichen der konischen Teilräume ist dabei vorgesehen, daß das Filterelement selbst konisch ausgebildet ist und vom Filterauslaß zum Filtereinlaß sich konisch verjüngt. Demgemäß ist in Fluid- oder Filterrichtung gesehen der Teilraum mit dem sich zum Filterauslaß verjüngenden Querschnitt vor dem Filterelement und der andere umgekehrt sich verbreiternde Querschnitt des anderen Teilraumes hinter dem Filterelement angeordnet. Vorzugsweise ist dabei vorgesehen, daß das Filterelement ein Stützrohr aufweist und daß das Filtermaterial austauschbar am Stützrohr festgelegt ist. Durch die erstgenannte Maßnahme ist sichergestellt, daß auch bei hohen Drücken das Filterelement seiner Funktion nachkommen kann und durch die andere Maßnahme oder Merkmalsausprägung wird erreicht, daß kostengünstig bei erschöpftem Filterelementenmaterial sich dieses gegen ein neues austauschen läßt, ohne daß eine komplette Entsorgung des Filterelementes mit Stützrohr notwendig wäre. Vorzugsweise ist dabei das Filtergehäuse zumindest im Bereich des aufgenommenen Filterelementes zylindrisch ausgebildet.

Bei einer besonders bevorzugten Ausführungsform der erfindungsgemäßen Filtervorrichtung weist der Filterein- und -auslaß derart freie Öffnungsquerschnitte zum Filterraum auf, daß eine gleichförmige Geschwindigkeitsverteilung des zu filternden Fluids auch an diesen Stellen gewährleistet ist. Vorzugsweise bestehen dabei das Filtergehäuse, der Filterein- und -auslaß sowie das Filterelement mit Stützrohr und Filtermaterial aus Edelstahlmaterialien.

Im folgenden wird die erfindungsgemäße Filtervorrichtung anhand einer Ausführungsform nach der Zeichnung näher erläutert.

Es zeigen in prinzipieller und nicht maßstäblicher Darstellung die
- Fig.1: teilweise in Ansicht, teilweise im Längsschnitt die gesamte Filtervorrichtung;
- Fig.2: teilweise in Ansicht, teilweise im Längsschnitt das Filterelement nach der Fig.1;
- Fig.3: teilweise in Ansicht, teilweise im Längsschnitt in vergrößerter Darstellung den unteren Anschlußbereich der Filtervorrichtung nach der Fig.1.

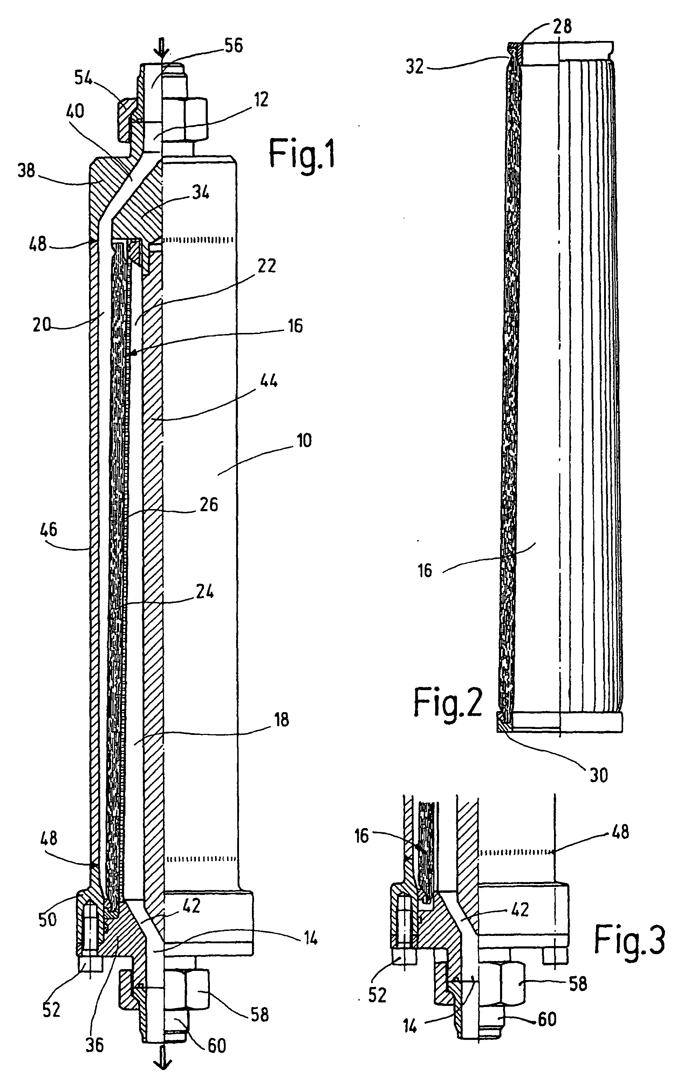

Die als Ganzes dem Grunde nach zylindrisch aufgebaute Filtervorrichtung weist ein Filtergehäuse 10 auf sowie einen Filtereinlaß 12 und einen Filterauslaß 14. Innerhalb des Filtergehäuses 10 ist ein Filterelement 16 als Ganzes angeordnet. Dieses unterteilt einen Filterraum 18 in einen ersten Teilraum 20 und einen zweiten Teilraum 22. Der erstgenannte Teilraum 20 verjüngt sich, wie dies insbesondere die Fig. 1 zeigt, vom Filtereinlaß 12 zum Filterauslaß 14 hin im freien Querschnitt. Der andere zweite Teilraum 22 hingegen verbreitert sich vom Filtereinlaß 12 zum Filterauslaß 14 im Querschnitt. Dabei findet die Verjüngung des Querschnittes des einen Teilraumes 20 in gleichem Maße und stetig statt wie die Verbreiterung des Querschnittes des anderen Teilraumes 22. Die angesprochenen beiden Teilräume 20,22 sind also konisch gegeneinanderliegend ausgebildet. Im übrigen bilden die Teilräume 20,22 ringförmig in sich geschlossene Kammerstrukturen innerhalb der Filtervorrichtung aus.

Zur Herstellung der Konizität in den Teilräumen 20,22 dient das Filterelement 16, das selbst konisch ausgebildet ist und vom Filterauslaß 14 zum Filtereinlaß 12 sich konisch verjüngt.

Das Filterelement 16 weist ein mattenartiges Filtermaterial 24 auf, das sich innenumfangsseitig an einem Stützrohr 26 mit Fluiddurchlässen abstützt. Das Filtermaterial 24 umfaßt außenumfangsseitig das Stützrohr 26 und ist in der Art einer Filtermatte um das Stützrohr 26 herumgelegt. Das Filtergehäuse 10 hingegen ist im Bereich des aufgenommenen Filterelementes 16 zylindrisch ausgebildet. Wie die Fig.1 und 3 für den unteren Bereich des weiteren zeigen, weisen der Filtereinlaß 12 und der Filterauslaß 14 derart freie Öffnungsquerschnitte zum Filterraum 18 auf, daß eine gleichförmige Geschwindigkeitsverteilung des zu filternden Fluids insbesondere in hochviskoser Form, beispielsweise in Form einer Polymerschmelze oder einer Polymerlösung, gewährleistet ist. Für den letztgenannten Fall sind dabei das Filtergehäuse 10, der Filtereinlaß 12 und der Filterauslaß 14 sowie das Filterelement 16 mit Stützrohr 26 und Filtermaterial 24 aus Edelstahlmaterialien hergestellt.

Wie die Darstellung nach der Fig.2 zeigt, kann das Filterelement 16 auch ohne Stützrohr 26 ausgebildet sein und das Filtermaterial 24 in Form einer Edelstahlmatte ist selbsttragend zwischen Endkappen 28 und 30 aufgenommen. In Blickrichtung gesehen auf die Figuren ist im Bereich der oberen Endkappe 28 das freie Ende des hohlzylindrischen Filtermaterials 24 nach innen eingekröpft und bildet derart eine Festlegestelle 32 an der oberen Endkappe 28 aus. Die Endkappen 28,30 sind mithin fest mit dem Filtermaterial 24 verbunden und lassen sich mit diesem gemeinsam, sofern vorhanden, von dem Stützrohr 26 abziehen und separat entsorgen, sofern der Verschmutzungsgrad dies notwendig macht. Ein neues, nicht verbrauchtes Filtermaterial 24 mit entsprechenden Endkappen 28,30 wird dann erneut auf das Stützrohr 26 aufgezogen oder mit diesem zusammen als Bauteil in der Filtervorrichtung festgelegt.

Wie des weiteren die Fig.1 zeigt, ist das Filterelement 16 zwischen einem oberen Aufnahmeteil 34 und einem unteren Aufnahmeteil 36 fixiert. Das obere Aufnahmeteil 34 weist an seinem freien Ende eine kegelartige Führungskonizität auf, die zusammen mit dem oberen Deckelteil 38 des Filtergehäuses 10 einen Fluidkanal 40 begrenzt, der einen umlaufenden Ringkanal ausbildet und der in seiner gezeigten Querschnittsform derart ausgebildet ist, daß sich ein gleichförmiger Zufluß des hochviskosen Fluids in den ersten Teilraum 20 ergibt. Hierzu verjüngt sich der Fluidkanal 40 an seinem freien Stirnende, über das er in den ersten Teilraum 20 mündet, gegenüber der gleichförmig verlaufenden Eintrittsstelle am Fluideinlaß 12. Die Zuführrichtung des Fluids ist dabei mit einem Pfeil in Fig.1 ebenso angegeben wie die Ablaufrichtung am Filterauslaß 14.

Das in Pfeilrichtung die Filtervorrichtung durchlaufende Fluid, das auf der Filtereinlaßseite 12 mit Verschmutzungen versehen ist, tritt also über den Fluidkanal 40 durchgehend in den ersten konischen Teilraum 20 ein und füllt diesen totraumfrei aus. Bei einer gleichmäßigen Verweildauer im ersten Teilraum 20 tritt dann das verschmutzte Fluid gleichförmig und stetig durch das Filtermaterial 24 und wird dort entsprechend abgereinigt. Das gereinigte Fluid tritt dann über die freien Durchlaßstellen des Stützrohres 26 in den zweiten Teilraum 22 und über diesen und den weiteren Fluidkanal 42 am Filterauslaß 14 aus der Filtervorrichtung gereinigt aus. Im Hinblick auf die gegenläufig angeordnete doppelte Konizität der beiden Teilräume 20,22 geschieht dies mit gleichmäßiger Strömungsgeschwindigkeit, so daß eine optimale Verweilzeitverteilung am Filterelement gewährleistet ist.

Im Inneren der Filtervorrichtung stützt sich das Aufnahmeteil 34 an einem stabartigen Filterteil 44 ab, die vorzugsweise gleichfalls aus Edelstahlmaterial gebildet ist. Über das dahingehende Aufnahmeteil 34 läßt sich das Filterteil 44 auch innerhalb der Filtervorrichtung führen und festlegen. Das Filtergehäuse 10 weist einen zylindrischen Mittengehäuseabschnitt 46 auf, der über randseitige Schweißstellen 48 mit dem oberen Deckelteil 38 sowie dem unteren Deckelteil-50 fest verbunden ist. Der untere Deckelteil. 50 hält über eine Schraubverbindung 52 das untere Aufnähmeteil 36 am Filtergehäuse 10 fest und fixiert derart das Filterelement 16 innerhalb des gesamten Filterraumes 18. Das obere Deckelteil 38 ist in Blickrichtung äuf die Fig.1 gesehen nach oben hin im Durchmesser verjüngt und bildet derart eine Anschlußstelle für eine Überwurfmutter 54 aus, über die sich derart ein Anschlußzuführstück 56 für die Polymerschmelzezufuhr anschließen läßt. Am gegenüberliegenden Ende der Filtervorrichtung ist eine entsprechende Überwurfmutter 58 vorgesehen, über die ein Anschlußabführstück 60 für die Abgabe des filtrierten Fluids in Form der gereinigten Polymerschmelze an die Filtervorrichtung angeschlossen ist. Entsprechende Gewindeabschnitt (nicht näher dargestellt) erleichtern das dahingehende Festlegen.

Durch Lösen der Schraubverbindung 52, die mehrere radial entlang des Umfangs der Filtervorrichtung angeordnete Festlegeschrauben umfaßt, ist das Abnehmen des unteren Aufnahmeteils 36 und das Entfernen des Filtermaterials 24 mit und ohne Stützrohr 26 ermöglicht. Ein Filterelementwechsel ist derart rasch erreichbar. Das Filterelement 16 und mithin das Filtermaterial 24 sowie derart bedingt die beiden Teilräume 20,22 weisen eine nur geringe Konizität.auf, beispielsweise in Form einer Neigung gegenüber der Horizontalen bzw. in Querrichtung der Filtervorrichtung gesehen in der Größenordnung 1° bis 5°.

## Patentansprüche

1. Filtervorrichtung mit einem Filtergehäuse (10), einem Filterein- (12) und -auslaß (14) sowie einem konischen Filterelement (16), das einen Filterraum (18) in zwei Teilräume (20,22) unterteilt, wobei ein Teilraum (20) vom Filtereinlaß (12) zum Filterauslaß (14) sich im Querschnitt konisch verjüngt und der andere Teilraum (22) sich vom Filtereinlaß (12) zum Filterauslaß (14) im Querschnitt konisch verbreitert und wobei die Konizitäten der beiden Teilräume (20,22) in gegensätzliche Richtungen stetig verlaufen, **dadurch gekennzeichnet, daß** die Verjüngung des Querschnittes des einen Teilraumes (20) in gleichem Maße stattfindet wie die Verbreiterung des Querschnittes des anderen Teilraumes (22), daß der eine Teilraum (20) nach außen zur Umgebung und der andere Teilraum (22) nach innen zur Mitte der Filtervorrichtung von jeweils einer zylindrischen Wand begrenzt sind und daß das Filterelement (16) sich in Richtung vom Filterauslaß (14) zum Filtereinlaß (12) hin konisch verjüngt.

2. Filtervorrichtung nach Anspruch 1, **dadurch gekennzeichnet, daß** die begrenzende zylindrische Wand für den einen Teilraum (20) aus dem Filtergehäuse (10) und für den anderen Teilraum (22) aus einem stabartigen Filterteil (44) gebildet ist, das sich mittig längs der Filtervorrichtung in ihrem Inneren erstreckt.

3. Filtervorrichtung nach Anspruch 1 oder 2, **dadurch gekennzeichnet, daß** das Filterelement (16) ein Stützrohr (26) aufweist und daß das Filtermaterial (24) austauschbar am Stützrohr (26) festgelegt ist.

4. Filtervorrichtung nach einem der Ansprüche 1 bis 3, **dadurch gekennzeichnet, daß** das Filtergehäuse (10) zumindest im Bereich des aufgenommenen Filterelementes (16) zylindrisch ausgebildet ist.

5. Filtervorrichtung nach einem der Ansprüche 1 bis 4, **dadurch gekennzeichnet, daß** der Filterein- (12) und -auslaß (14) derart freie Öffnungsquerschnitte zum Filterraum (18) aufweist, daß eine gleichförmige Geschwindigkeitsverteilung des zu filternden Fluids gewährleistet ist.

6. Filtervorrichtung nach Anspruch 5, **dadurch gekennzeichnet, daß** das zu filternde Fluid hochviskos, insbesondere eine Polymerschmelze oder eine Polymerlösung ist.

7. Filtervorrichtung nach einem der Ansprüche 1 bis 6, **dadurch gekennzeichnet, daß** das Filtergehäuse (10), der Filterein- (12) und -auslaß (14) sowie das Filterelement (16) mit Stützrohr (26) und Filtermaterial (24) aus Edelstahlmaterial bestehen.

## Claims

1. A filter device with a filter housing (10), a filter inlet (12) and a filter outlet (14) as well as a conical filter element (16) which divides a filter chamber (18) into two part chambers (20, 22), whereby the cross-section of one of the part chambers (20) tapers down conically from the filter inlet (12) towards the filter outlet (14) and the cross-section of the other part chamber (22) widens out conically from the filter inlet (12) towards the filter outlet (14) and whereby the conical shapes of the two part chambers (20, 22) extend at an even rate in opposite directions, **characterised in that** the cross-section of one part chamber (20) tapers down at the same rate as the cross-section of the other part chamber (22) widens out, that the part chamber (20) is delimited to the outside and the other part chamber (22) is delimited to the centre of the filter device by a cylindrical wall in each instance and that the filter element (16) tapers down conically from the filter outlet (14) in the direction of the filter inlet (12).

2. A filter device according to Claim 1, **characterised in that** the delimiting cylindrical wall for one part chamber (20) is formed by the filter housing (10) and for the other part chamber (22) of a bar-like filter part (44) which extends centrally along the filter device inside it.

3. A filter device according to Claim 1 or 2, **characterised in that** the filter element (16) has a supporting tube (26) and that the filtering material (24) is replaceably fixed at the supporting tube (26).

4. A filter device according to one of the Claims 1 to 3, **characterised in that** the filter housing (10) is cylindrical at least in the area of the fitted filter element (16).

5. A filter device according to one of the Claims 1 to 4, **characterised in that** the filter inlet (12) and the filter outlet (14) have clear openings to the filter chamber (18) with such cross-sections that an even distribution of the flow rate of the fluid to be filtered is guaranteed.

6. A filter device according to Claim 5, **characterised in that** the fluid which is to be filtered, especially polymer melt or a polymer solution, is highly viscous,

7. A filter device according to one of the Claims 1 to 6, **characterised in that** the filter housing (10), the filter inlet (12) and the filter outlet (14) as well as the filter element (16) with the supporting tube (26) and the filtering material (24) are made of stainless steel.

## Revendications

1. Dispositif de filtrage avec un boîtier (10), un orifice d'admission (12) et un orifice d'évacuation (14) ainsi qu'un élément filtrant conique (16) qui divise une chambre de filtrage (18) en deux sous-chambres (20, 22), moyennant quoi une sous-chambre (20) s'effile de manière conique de l'orifice d'admission (12) à l'orifice d'évacuation (14) dans la section transversale et l'autre sous-chambre (22) s'élargit de manière conique de l'orifice d'admission (12) à l'orifice d'évacuation (14) dans la section transversale et moyennant quoi les conicités des deux sous-chambres (20,22) s'étendent de manière continue dans des directions opposées, **caractérisé en ce que** l'effilement de la section transversale de la sous-chambre (20) se fait dans la même mesure que l'élargissement de la section transversale de l'autre sous-chambre (22), **en ce que** la sous-chambre (20) est limitée vers l'extérieur jusqu'au milieu environnant et l'autre sous-chambre (22) vers l'intérieur jusqu'au milieu du dispositif de filtrage par, respectivement, une paroi cylindrique et **en ce que** l'élément filtrant (16) s'effile de manière conique dans la direction allant de l'orifice d'évacuation (14) jusqu'à l'orifice d'admission (12).

2. Dispositif de filtrage selon la revendication 1, **caractérisé en ce que** la paroi cylindrique limitative, pour la sous-chambre (20), est formée du boîtier (10) et pour l'autre sous-chambre (22) d'une partie de filtre à mode de tige (44) qui s'étend de manière axiale le long du dispositif de filtrage, à l'intérieur de ce dernier.

3. Dispositif de filtrage selon la revendication 1 ou 2, **caractérisé en ce que** l'élément filtrant (16) présente un support tubulaire (26) et **en ce que** le matériau de filtrage (24) est fixé sur le support tubulaire (26) de manière à pouvoir être remplacé.

4. Dispositif de filtrage selon l'une quelconque des revendications 1 à 3, **caractérisé en ce que** le boîtier (10) est configuré en cylindre au moins au niveau de l'élément filtrant (16) logé.

5. Dispositif de filtrage selon l'une quelconque des revendications 1 à 4, **caractérisé en ce que** l'orifice d'admission (12) et l'orifice d'évacuation (14) présentent des sections d'orifice libres en direction de la chambre de filtrage (18) de telle sorte qu'une répartition uniforme de la vitesse du fluide à filtrer est garantie.

6. Dispositif de filtrage selon la revendication 5, **caractérisé en ce que** le fluide à filtrer est très visqueux ; il s'agit en particulier d'une fonte polymère ou d'une solution polymère.

7. Dispositif de filtrage selon l'une quelconque des revendications 1 à 6, **caractérisé en ce que** le boîtier (10), l'orifice d'admission (12) et l'orifice d'évacuation (14) ainsi que l'élément filtrant (16) avec le support tubulaire (26) et le matériau de filtrage (24) sont composés d'un matériau en acier inoxydable.
